(19)

Europäisches
Patentamt
European
Patent Office
Office européen
des brevets

(11) **EP 2 187 683 A1**

(12) **EUROPEAN PATENT APPLICATION**
published in accordance with Art. 153(4) EPC

(43) Date of publication:
**19.05.2010 Bulletin 2010/20**

(51) Int Cl.:
*H04W 16/00* (2009.01)

(21) Application number: **07792398.5**

(22) Date of filing: **10.08.2007**

(86) International application number:
**PCT/JP2007/065753**

(87) International publication number:
**WO 2009/022390 (19.02.2009 Gazette 2009/08)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Fujitsu Limited**
**Kawasaki-shi, Kanagawa 211-8588 (JP)**

(72) Inventors:
• **KAWASAKI, Yoshihiro**
  **Kawasaki-shi**
  **Kanagawa 211-8588 (JP)**
• **TAJIMA, Yoshiharu**
  **Kawasaki-shi**
  **Kanagawa 211-8588 (JP)**

• **OHTA, Yoshiaki**
  **Kawasaki-shi**
  **Kanagawa 211-8588 (JP)**
• **OBUCHI, Kazuhisa**
  **Kawasaki-shi**
  **Kanagawa 211-8588 (JP)**
• **TANAKA, Yoshinori**
  **Kawasaki-shi**
  **Kanagawa 211-8588 (JP)**

(74) Representative: **Stebbing, Timothy Charles et al**
**Haseltine Lake LLP**
**Lincoln House, 5th Floor**
**300 High Holborn**
**London WC1V 7JH (GB)**

(54) **RADIO BASE STATION AND MOBILE STATION**

(57)     A signal selected from among multiple signal groups and used as a random access signal can be effectively used.

A radio environment acquirer (1a) acquires a radio environment condition of radio communication with a subordinate mobile station (2). A transmitter (1b) transmits, to the mobile station (2), information notifying a signal which is selected from among multiple signal groups and which is to be transmitted in a transmission area of a random access signal, and a notification of a period over which transmission of the signal as the random access signal is permitted. The period is variable in accordance with the radio environment condition acquired by the radio environment acquirer (1a).

FIG. 1

EP 2 187 683 A1

**Description**

Technical Field

The present invention relates to radio base stations and mobile stations, and more particularly, to a radio base station and a mobile station which are configured to transmit/receive a random access signal to/from each other at the time of handover.

Background Art

Currently, LTE (Long Term Evolution) is being discussed as the next generation system of 3GPP (3rd Generation Partnership Project). In the 3GPP next generation system, an uplink not only allows data to be transferred according to schedule but also permits, like the present W-CDMA (Wideband Code Division Multiple Access), data transmission based on random access. Random access is used, for example, when a terminal initially accesses a base station to establish connection therewith for the first time, such as at the time of power activation, and when the terminal accesses a handover destination base station for the first time during the handover to a neighboring cell.

Where a hard handover method is employed for the handover to a neighboring cell, the terminal first cuts off the connection with the base station in the handover source cell and then establishes connection with the base station in the handover destination cell (break-before-make handover).

Thus, when a handover is started in the middle of data transmission, DL (Down Link) data to be sent to the terminal is not transmitted to the terminal but is forwarded from the handover source base station, with which the terminal has been communicating until then, to the handover destination base station. Until the handover is completed, the handover destination base station needs to hold, in its buffer, the DL data to be sent to the terminal. Also, the terminal needs to discontinue transmitting UL (UP Link) data and hold the data in its buffer.

Accordingly, if a handover is conducted during verbal communication by means of voice packets, the verbal communication is interrupted. It is therefore undesirable that the time necessary for the handover be prolonged. If the handover time is long, even ordinary data such as electronic mail and image data may possibly cause buffer overflow, and thus, a prolonged handover time is not desirable.

The terminal captures a DL synchronization channel transmitted from the handover destination base station over a radio link and, after synchronization is established, transmits a random access signal by using a predetermined slot of the UL. A plurality of preamble sequences (preamble signals) with an identical length but different sequence patterns are prepared for the random access signal. The terminal selects an appropriate preamble sequence and sends the selected preamble sequence as the random access signal to the base station.

As stated above, terminals transmit their random access signal not only at the time of handover but immediately after the power activation. Thus, it is occasionally the case that when a plurality of random access signals with an identical preamble sequence are simultaneously received via the same slot, the base station is unable to determine which signals have been received from which terminals. In this case, the base station requests retransmission of the random access signals. As a result, the handover time is undesirably prolonged.

To solve the problem, a method has been proposed in which the handover destination base station allocates a preamble sequence to a terminal which is to conduct a handover (see, e.g., Non-patent Document 1). For example, when transmitting a handover permission signal to the handover source base station, the handover destination base station sends preamble sequence information (e.g., sequence number) used exclusively for handover. The terminal which is to conduct a handover receives the sequence number from the handover source base station and transmits a random access signal including the preamble sequence with the designated sequence number to the handover destination base station. Even if a plurality of random access signals are received via the same random access signal slot, the handover destination base station can identify the random access signal with the preamble sequence designated thereby. Further, since the preamble sequence is exclusively used by the terminal over a specified period, collision of preamble sequences lessens. Accordingly, the probability that the terminal succeeds in transmitting the random access signal increases, making it possible to shorten the handover time.

There is a limit to the number of handover-specific preamble sequences that the handover destination base station can designate exclusively for handover. In EUTRAN (Evolved Universal Terrestrial Radio Access), for example, there are 64 preamble sequences, but only several sequences among the 64 sequences are used exclusively for handover.

Non-patent Document 1: 3rd Generation Partnership Project, "Evolved Universal Terrestrial Radio Access (E-UTRA) and Evolved Universal Terrestrial Radio Access Network (EUTRAN); Overall description; Stage 2 (Release 8)", 3GPP TS36.300, 2007-06, V8.1.0.

Disclosure of the Invention

Problems to be Solved by the Invention

The number of handover-specific preamble sequences is limited, and therefore, if a large number of mobile stations perform handover, the preamble sequences run short. Accordingly, there is a demand for techniques that enable effective allocation of a limited number of preamble sequences to mobile stations.

The present invention was created in view of the above circumstances, and an object thereof is to provide a radio base station and a mobile station which are configured to effectively use a signal transmitted as a random access signal.

Means for Solving the Problems

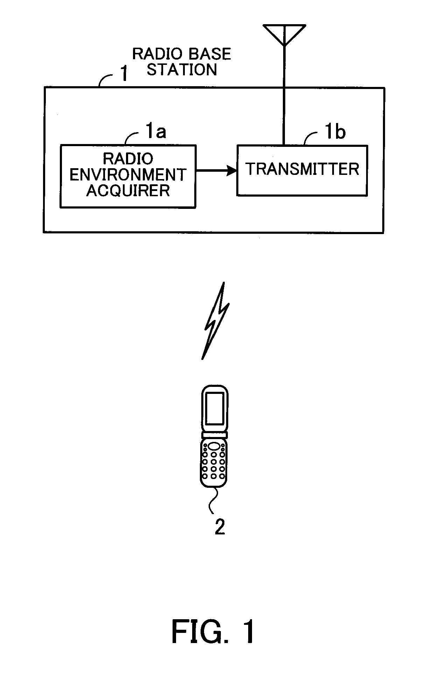

To solve the above problems, the present invention provides a radio base station 1 for performing radio communication with a mobile station 2, as illustrated in FIG. 1. The radio base station 1 includes a radio environment acquirer 1a configured to acquire a radio environment condition of the radio communication with the mobile station 2 subordinate to the radio base station, and a transmitter 1b configured to transmit, to the mobile station 2, information notifying a signal which is selected from among multiple signal groups and which is to be transmitted in a transmission area of a random access signal, and a notification of a period over which transmission of the signal as the random access signal is permitted, wherein the period is variable in accordance with the radio environment condition acquired by the radio environment acquirer 1a.

With the radio base station 1, the period over which the mobile station 2 is permitted to transmit the signal as the random access signal is varied in accordance with the radio environment of the mobile station 2.

Also, to solve the above problems, the present invention provides a mobile station for performing radio communication with a radio base station. The mobile station includes a receiver configured to receive, from the radio base station, information notifying a signal which is selected from among multiple signal groups and which is to be transmitted in a transmission area of a random access signal, and a notification of a period over which transmission of the signal as the random access signal is permitted, and a transmitter configured to transmit the signal designated by the information, as the random access signal to the radio base station during the period.

Thus, during the period notified by the radio base station, the mobile station is permitted to transmit the random access signal by using the signal designated by the information received from the radio base station.

Advantageous Effects of the Invention

According to the present invention, it is possible to effectively use the signal selected from among the signal groups and transmitted as the random access signal.

The above and other objects, features and advantages of the present invention will become apparent from the following description when taken in conjunction with the accompanying drawings which illustrate preferred embodiments of the present invention by way of example.

Brief Description of the Drawings

FIG. 1 schematically illustrates a radio base station;

FIG. 2 illustrates an exemplary network configuration of a radio communication system;

FIG. 3 illustrates allocation of preamble sequences in a handover destination base station;

FIG. 4 illustrates a usage period of a random access signal;

FIG. 5 is a functional block diagram of a terminal;

FIG. 6 is a functional block diagram of a handover source base station;

FIG. 7 is a functional block diagram of the handover destination base station;

FIG. 8 is a hardware block diagram of the terminal;

FIG. 9 is a hardware block diagram of the handover source base station; and

FIG. 10 is a hardware block diagram of the handover destination base station.

Best Mode of Carrying out the Invention

The principles of the present invention will be described in detail below with reference to the drawings.
FIG. 1 schematically illustrates a radio base station. The figure illustrates a radio base station 1 and a mobile station 2 which communicates by radio with the radio base station 1. The radio base station 1 includes a radio environment acquirer 1a and a transmitter 1b.
The radio environment acquirer 1a acquires the radio environment condition of radio communication with the mobile station 2 subordinate to the radio base station.
The transmitter 1b transmits, to the mobile station 2, information notifying a signal which is selected from among multiple signal groups and which is to be transmitted in the transmission area of a random access signal, and a notification of a period over which transmission of the signal as the random access signal is permitted.
For example, the transmitter 1b transmits, to the mobile station 2, a sequence number indicating a preamble sequence which is selected from among a group of handover-specific preamble sequences used exclusively for handover and which is to be transmitted via a random access signal slot. Also, the transmitter notifies the mobile station 2 of the period over which the transmission of the selected preamble sequence (preamble signal) as the random access signal is permitted.

The period that the transmitter 1b notifies the mobile station is variable in accordance with the radio environment condition acquired by the radio environment acquirer 1a.

The better the radio environment of the mobile station 2, for example, the higher the probability that the base station successfully receives the random access signal from the mobile station 2 becomes, and the worse the radio environment, the lower the probability of successful reception of the random access signal becomes. Accordingly, the period is set longer in a worse radio environment and shorter in a better radio environment. Namely, a mobile station in a bad radio environment is allocated a long period so that handover may meet with success even in such an environment, and a mobile station in a good radio environment is allocated a short period because the probability that the handover will instantly meet with success is considered to be high. This makes it possible to effectively use a limited number of handover-specific preamble sequences used exclusively for handover.

Thus, in accordance with the radio environment of the mobile station 2, the radio base station 1 varies the usage period over which the mobile station 2 is allowed to transmit the signal as the random access signal, thereby permitting effective use of the signal selected from among the signal groups and transmitted as the random access signal.

Embodiments of the present invention will be now described in detail with reference to the drawings.

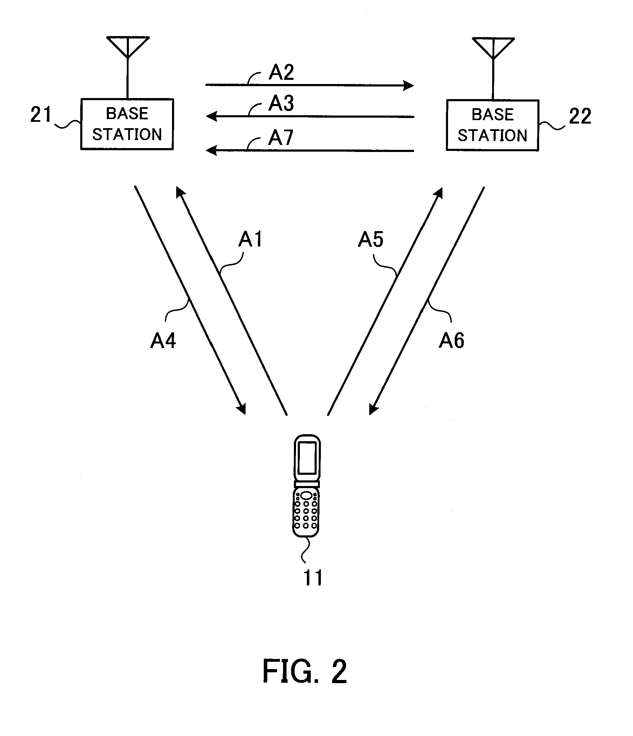

FIG. 2 illustrates an exemplary network configuration of a radio communication system. In the figure, a terminal 11 and base stations 21 and 22 are illustrated. Although not illustrated in FIG. 2, an aGW (Access Gateway) and the like as well as a core network are provided as equipment higher in level than the base stations 21 and 22, to constitute EUTRAN.

Suppose that the terminal 11 is currently connected by radio with the base station 21. The terminal 11 measures the radio environments of surrounding cells including the cell of the base station 22, and transmits the measurement results to the base station 21 (in the figure, arrow A1).

On receiving the radio environment measurement results from the terminal 11, the base station 21 determines on the basis of the measurement results whether a handover of the terminal 11 is needed or not. It is assumed here that the handover is needed and that the destination of the handover is the base station 22.

Also, the base station 21 determines the period of usage of a handover-specific preamble sequence which is to be allocated to the terminal 11 by the handover destination base station 22. The preamble sequence usage period is determined in accordance with the radio environment of the radio communication between the terminal 11 and the handover source base station 21.

When the terminal 11 is moving at high speed, for example, the radio link with the base station 21 is generally in bad condition. Accordingly, the success rate at which the handover destination base station 22 successfully receives the random access signal from the terminal 11 is assumed to be low. In this case, the base station 21 sets a long preamble sequence usage period for the terminal 11 so as to increase the handover success rate of the base station 22.

On the other hand, when the terminal 11 is moving at low speed, the radio link with the base station 21 is generally in good condition. Thus, the handover destination base station 22 is thought to be able to successfully receive the random access signal from the terminal 11 at a high rate. In this case, the base station 21 sets a short preamble sequence usage period for the terminal 11. This is because where the radio link is in good condition, the success rate of the handover to the base station 22 is considered high even if the usage period of the handover-specific preamble sequence is short.

The base station 21 sends a handover request to the handover destination base station 22 (in the figure, arrow A2). At this time, the handover source base station 21 includes the determined preamble sequence usage period in the handover request.

When the handover request is received from the base station 21, the handover destination base station 22 determines whether to permit the handover or not. For example, the base station 22 determines whether to permit the handover or not in accordance with the communication load of its own.

Also, in accordance with the allocation status of the handover-specific preamble sequences, the base station 22 determines whether the handover-specific preamble sequence usage period requested by the handover source base station 21 is permissible or not. When permitting the handover-specific preamble sequence usage period, the base station 22 notifies the handover source base station 21 of the permission or of a value indicative of the usage period. If the requested usage period is not permissible, a usage period shorter than the requested usage period is notified.

The base station 22 has handover-specific preamble sequences which are used exclusively for handover and can be allocated to terminals at the time of handover. These preamble sequences are limited in number. Thus, if a long preamble sequence usage period is requested when the number of the remaining preamble sequences is small, the preamble sequence resource may possibly run short. In such case, the base station 22 judges that the preamble sequence usage period requested by the handover source base station 21 is not permissible. Then, the base station 22 allocates the handover source base station a usage period shorter than the requested usage period, or does not permit the handover source base station to use a handover-specific preamble sequence itself (in this case, the handover destination base station implicitly or explicitly instructs the handover source base station to use an ordinary preamble sequence).

If the handover is judged to be permissible, the base station 22 notifies the base station 21 that the handover has been permitted (in the figure, arrow A3). When permitting the preamble sequence usage period requested by the base station 21, the base station 22 sends a notification that the requested usage period has been permitted, as well as preamble sequence information (e.g., sequence number) indicative of the preamble sequence allocated to the terminal 11. On the other hand, if the requested preamble sequence usage period is not permissible, the base station 22 notifies the base station 21 of a usage period shorter than the requested usage period or that the use of a handover-specific preamble sequence is not permitted.

On receiving the handover permission notification from the base station 22, the handover source base station 21 instructs the terminal 11 to start the handover (in the figure, arrow A4). Where the received handover permission is accompanied by the preamble sequence information, the base station 21 notifies the terminal 11 of the preamble sequence allocated to the terminal 11, along with the preamble sequence usage period.

When the handover start instruction is received from the base station 21, the terminal 11 captures a DL synchronization channel transmitted from the handover destination base station 22 and, after synchronization is established, transmits a random access signal via a predetermined transmission slot of the UL (in the figure, arrow A5).

Where the preamble sequence information and the preamble sequence usage period are notified by the base station 21, the terminal 11 transmits, to the base station 22, a random access signal with the preamble sequence designated by the received preamble sequence information, via a random access signal transmission slot within the usage period designated by the received information. If the first attempt fails, the terminal again transmits the random access signal via another random access signal transmission slot within the usage period.

On the other hand, where neither the preamble sequence information nor the preamble sequence usage period is notified by the base station 21, the terminal 11 randomly selects an ordinary preamble sequence from among those different from the handover-specific preamble sequences, and transmits the random access signal to the base station 22.

Also, if the transmission of the random access signal with the preamble sequence allocated by the base station 22 does not meet with success during the designated preamble sequence usage period, the terminal 11 randomly selects an ordinary preamble sequence other than the handover-specific preamble sequences after the lapse of the usage period, and transmits the random access signal to the base station 22.

If the random access signal from the terminal 11 is successfully received, the base station 22 notifies the terminal 11 of the successful reception (in the figure, arrow A6). Also, the base station 22 notifies the base station 21 that the handover has been successfully conducted (in the figure, arrow A7).

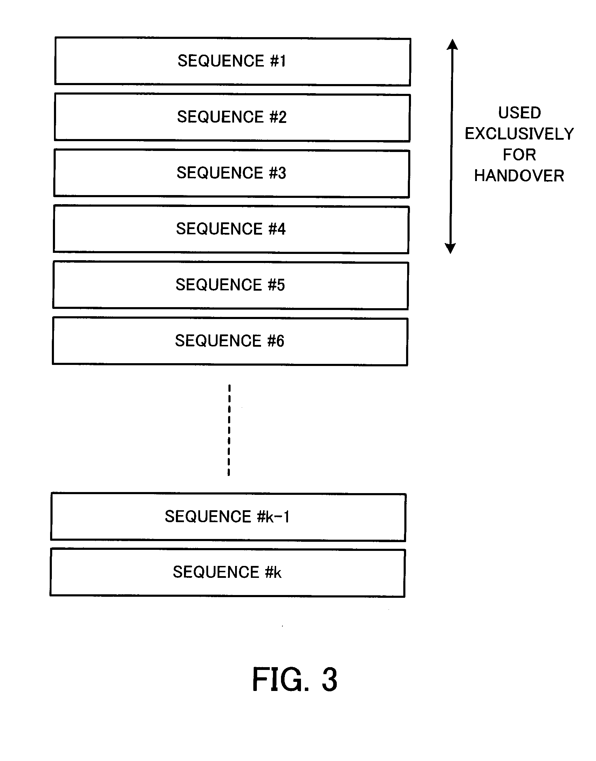

FIG. 3 illustrates the allocation of preamble sequences in the handover destination base station. In the figure, the preamble sequences with sequence numbers #1 to #k are illustrated.

The preamble sequences can be generated, for example, by using a code generation formula which can be indicated by the following expression (1):

$$PS = f(x, y) \quad \cdots \cdots (1)$$

In the expression, f denotes the code generation formula, x is a value that determines the sequence length of a preamble sequence, and y is a value by which a preamble sequence is selected and corresponds to #1 to #k in FIG. 3. Namely, specifying a sequence number and a sequence length uniquely determines a preamble sequence.

As illustrated in FIG. 3, the sequence numbers #1 to #4 are used exclusively for handover. In this case, one of the sequence numbers #1 to #4 is allocated by the handover destination base station 22 to the terminal 11 which is about to carry out a handover.

In the example illustrated in FIG. 2, therefore, the base station 22 allocates one of the preamble sequences with the sequence numbers #1 to #4 to the terminal 11 which is performing a handover. Then, the base station 22 sends the sequence number allocated to the terminal 11, as the preamble sequence information to the handover source base station 21.

The sequence numbers #5 to #k, on the other hand, are allocated to terminals not in the process of handover, for example, to terminals of which the power has just been activated. In this case, the terminal 11 itself randomly selects and uses one of the preamble sequences with the sequence numbers #5 to #k.

Also, where the terminal 11 which is performing a handover is not allocated a handover-specific preamble sequence by the handover destination base station 22, one of the preamble sequences with the sequence numbers #5 to #k is randomly selected and used by the terminal 11 itself.

Thus, if, in the example illustrated in FIG. 2, neither the preamble sequence information nor the preamble sequence usage period is notified by the handover source base station 21, the terminal 11 randomly selects one of the preamble sequences with the sequence numbers #5 to #k and transmits the random access signal to the handover destination base station 22.

Further, where the terminal 11 which is performing a handover fails to succeed in the handover during the preamble sequence usage period, the terminal uses one of the preamble sequences with the sequence numbers #5 to #k. Specifically, if the terminal 11 fails to succeed in the handover during the notified preamble sequence usage period, the terminal 11 releases the preamble sequence allocated by the base station 22 and randomly selects one of the preamble sequences with the sequence numbers #5 to #k. This enables the handover destination base station 22 to allocate the handover-specific preamble sequence to a different terminal which is about to perform a handover.

In the above example, the sequence numbers #1 to #4 are used exclusively for handover, but the allocation of the handover-specific sequence numbers is not limited to the illustrated one alone. Also, the number of handover-specific preamble sequences may vary from cell to cell.

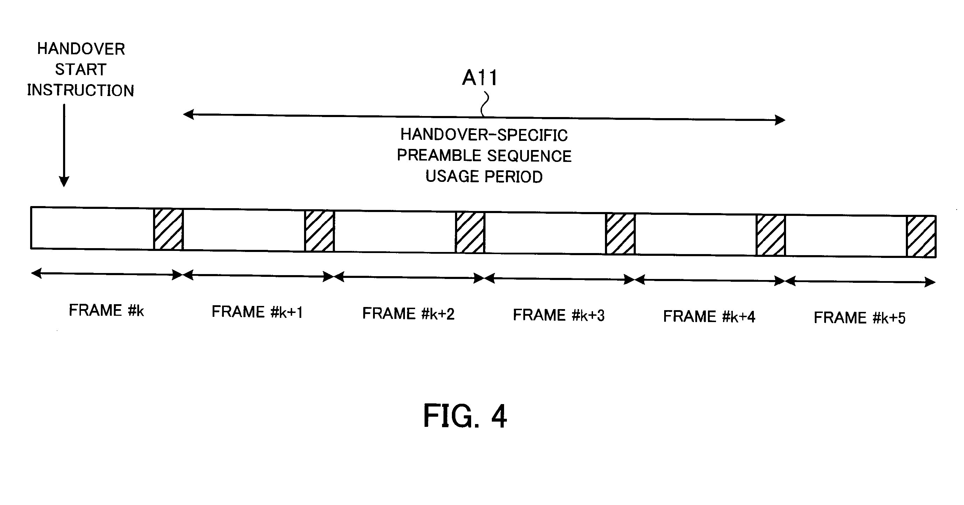

FIG. 4 illustrates the period of usage of the random access signal. The figure depicts frames #k to #k+5 transmitted by radio from the terminal 11, which is performing a handover, to the handover destination base station 22. In the figure, hatched regions indicate slots via which the random access signal is transmitted.

Let us suppose that the terminal 11 receives a handover start instruction from the handover source base station 21 in the frame #k, as illustrated in FIG. 4. Also, suppose that the preamble sequence usage period notified by the handover source base station 21 is equivalent to four frames, as indicated by the doubleheaded arrow A11 in the figure. In this case, using the random access signal transmission slots of the frames #k+1 to #k+4, the terminal 11 transmits, to the handover destination base station 22, the random access signal including the preamble sequence allocated by the handover destination base station 22. The handover destination base station 22 may designate not only the usage period of the handover-specific preamble sequence allocated thereby but also the usage start time (e.g., the frame #k+1 in the example of FIG. 4). Designating the usage start time in addition to the usage period permits unwasted allocation of the handover-specific preamble sequences.

If the handover does not succeed during the preamble sequence usage period indicated by the doubleheaded arrow All in FIG. 4, the terminal 11 releases the preamble sequence allocated by the handover destination base station 22. Specifically, in the frame #k+5 or later, the terminal 11 randomly selects one of the non-handover-specific preamble sequences with the sequence numbers #5 to #k, explained above with reference to FIG. 3, and transmits the selected preamble sequence as the random access signal to the handover destination base station 22.

Consequently, after the lapse of the random access signal usage period permitted for the terminal 11, the handover destination base station 22 can allocate a different terminal the preamble sequence which has been allocated to the terminal 11 until then, whereby the preamble sequences can be effectively used.

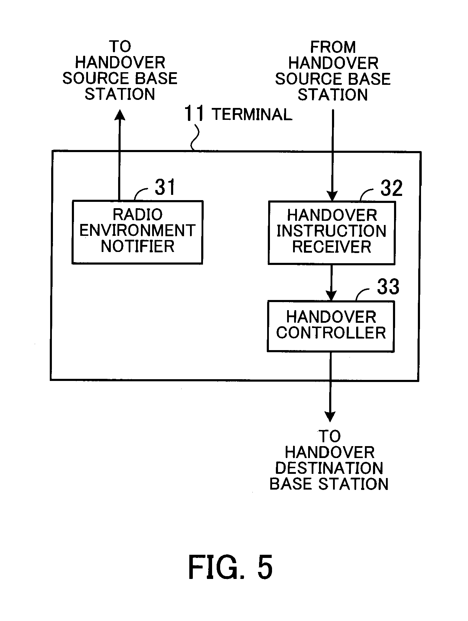

FIG. 5 is a functional block diagram of the terminal. As illustrated in the figure, the terminal 11 comprises a radio environment notifier 31, a handover instruction receiver 32, and a handover controller 33.

The radio environment notifier 31 acquires radio environment conditions of the surrounding cells and notifies the base station 21, with which radio connection is currently established, of the acquired radio environment conditions.

The handover instruction receiver 32 receives a handover instruction from the handover source base station 21.

On receiving handover instruction, the handover controller 33 carries out a handover to the handover destination base station 22.

Where the handover instruction receiver 32 has received not only the handover instruction but the preamble sequence information and the notification of the preamble sequence usage period, the handover controller 33 transmits, as the random access signal, the preamble sequence with the sequence number included in the received preamble sequence information, to the handover destination base station 22 during the notified preamble sequence usage period.

If the handover using the preamble sequence allocated by the handover destination base station 22 does not meet with success during the preamble sequence usage period, the handover controller 33 selects a non-handover-specific preamble sequence at random and transmits the selected preamble sequence as the random access signal to the handover destination base station 22.

Where the received handover instruction is accompanied by neither the preamble sequence information nor the notification of the preamble sequence usage period, the handover controller randomly selects a non-handover-specific preamble sequence and transmits the selected preamble sequence as the random access signal to the handover destination base station 22.

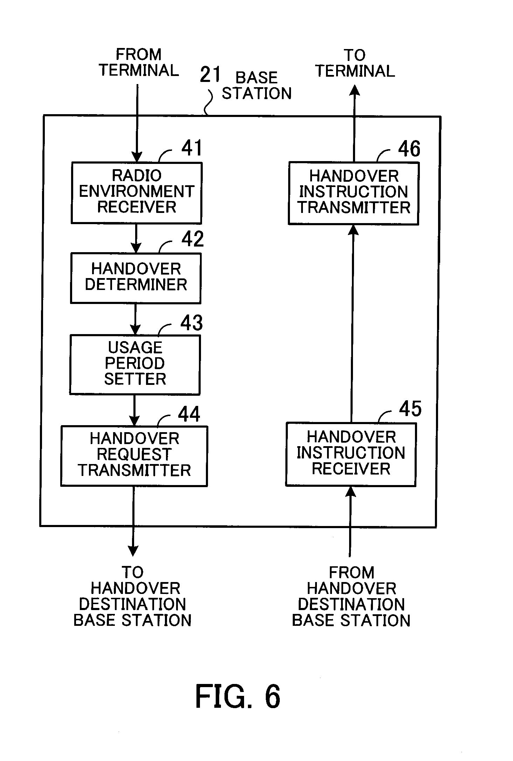

FIG. 6 is a functional block diagram of the handover source base station. As illustrated in the figure, the handover source base station 21 comprises a radio environment receiver 41, a handover determiner 42, a usage period setter 43, a handover request transmitter 44, a handover instruction receiver 45, and a handover instruction transmitter 46.

The radio environment receiver 41 receives information on the radio environments of surrounding cells from the terminal 11.

Based on the radio environment information received by the radio environment receiver 41, the handover determiner 42 determines whether a handover of the terminal 11 is needed or not. For example, if the radio environment of the cell of some other base station is better than that of the cell of this base station 21, the handover determiner 42 judges that a handover needs to be conducted.

The usage period setter 43 determines the preamble sequence usage period to be allocated to the terminal 11 which is to carry out a handover. For example, based on the radio environments notified from the terminal 11 such as the main signal level, noise level, interfering receive signal level or Doppler frequency, the usage period setter 43 determines the necessity for handover and estimates the preamble sequence usage period. When estimating the effective period of the preamble sequence, the usage period setter also makes use of the results of measurement of the radio signal itself (in particular, Doppler frequency) which has been transmitted from the terminal 11 to the base station 21. More specifically, when the terminal 11 is moving at high speed, the Doppler frequency is high and it is thought that the success rate at which the handover destination base station 22 successfully receives the random access signal is low. In this case, therefore, the preamble sequence usage period is set to a long period so that the handover destination base station 22 may succeed in receiving the random access signal at an increased success rate. Also while the main signal level is low and the noise level is high, the preamble sequence usage period is set long. On the other hand, when the Doppler frequency is low or when the main signal level is high and the noise level is low, the probability that the handover destination base station successfully receives the random access signal is thought to be high, and therefore, the preamble sequence usage period is set to a short period.

Further, the usage period setter 43 varies the preamble sequence usage period also depending on the type of data that the terminal 11 is communicating by radio. For example, while the terminal 11 is conveying verbal conversation, it is desirable that the handover meet with success with a high probability in the shortest possible time so as not to interrupt the verbal communication. Accordingly, in this case, the usage period setter 43 sets the preamble sequence usage period to a long period. For ordinary data such as electronic mail and image data, on the other hand, the handover may take a longer time than in the case of voice data, and therefore, the preamble sequence usage period is set relatively short.

When it is judged by the handover determiner 42 that the handover needs to be effected, the handover request transmitter 44 sends a handover request to the handover destination base station 22. At the time of sending the handover request to the handover destination base station 22, the handover request transmitter 44 also notifies the handover destination base station 22 of the preamble sequence usage period set by the usage period setter 43.

The handover instruction receiver 45 receives a handover instruction and preamble sequence information from the handover destination base station 22.

The handover instruction transmitter 46 transmits, to the terminal 11 by radio, the handover instruction and the preamble sequence information received by the handover instruction receiver 45, as well as a notification of the preamble sequence usage period set by the usage period setter 43.

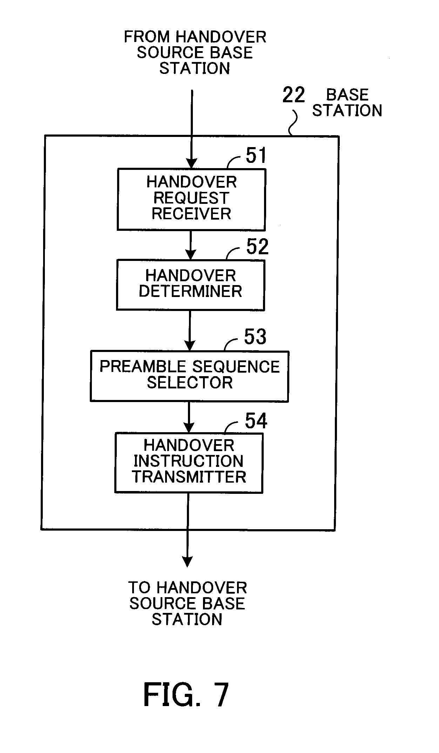

FIG. 7 is a functional block diagram of the handover destination base station. As illustrated in the figure, the handover destination base station 22 comprises a handover request receiver 51, a handover determiner 52, a preamble sequence selector 53, and a handover instruction transmitter 54.

The handover request receiver 51 receives the handover request from the handover source base station 21. The handover request includes the preamble sequence usage period set by the handover source base station 21.

The handover determiner 52 determines whether to permit the handover of the terminal 11 or not in accordance with the communication load status of the local base station 22. If the communication load permits, for example, the handover determiner permits the handover to be executed.

The preamble sequence selector 53 determines whether to permit the terminal 11 to use the preamble sequence usage period included in the notification received by the handover request receiver 51. In accordance with the allocation status of the handover-specific preamble sequences, the preamble sequence selector 53 determines whether to permit the preamble sequence usage period or not.

For example, if the requested preamble sequence usage period is long even though the number of the remaining handover-specific preamble sequences is small, such a long usage period is not permitted. In this case, the preamble sequence selector permits the terminal to use a usage period shorter than the requested usage period. On the other hand, if the number of the remaining handover-specific preamble sequences is small but the requested preamble sequence usage period is short, such a short usage period may be permitted. Alternatively, in such case, the use of the handover-specific preamble sequences may be prohibited.

When permitting the use of a handover-specific preamble sequence, the preamble sequence selector 53 selects a handover-specific preamble sequence. For example, the preamble sequence selector selects the sequence number of an unused handover-specific preamble sequence, as explained above with reference to FIG. 3.

When it is judged by the handover determiner 52 that the handover of the terminal 11 is permissible, the handover instruction transmitter 54 transmits a handover instruction (permission) to the handover source base station 21. At this time, if a handover-specific sequence number has been selected by the preamble sequence selector 53, the handover instruction transmitter 54 transmits preamble sequence information including the selected sequence number to the handover source base station 21. On the other hand, if no handover-specific sequence number has been selected by the preamble sequence selector 53, the handover instruction transmitter does not transmit preamble sequence information to the handover source base station 21.

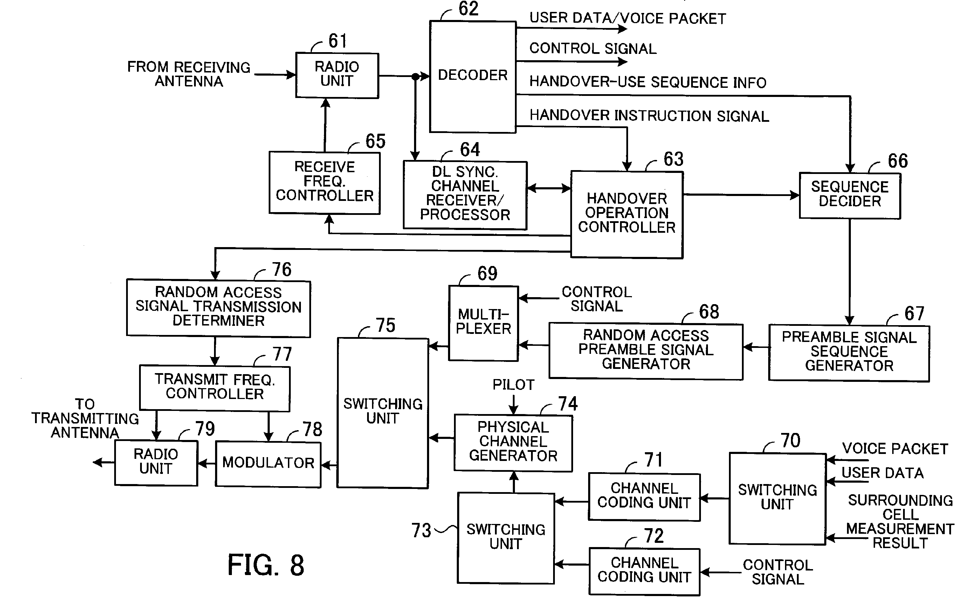

FIG. 8 is a hardware block diagram of the terminal. A radio unit 61 receives radio signals from the base stations 21 and 22 via a receiving antenna.

A decoder 62 decodes the radio signal received by the radio unit 61. User data (ordinary data), voice packets and control signals contained in the decoded radio signal are output to internal circuitry. Decoded handover-use sequence information (preamble sequence information) is output to a sequence decider 66, and a decoded handover instruction signal is output to an handover operation controller 63.

On receiving the handover instruction signal, the handover operation controller 63 controls the handover operation. For example, the handover operation controller controls capturing of the DL synchronization channel of the handover destination base station 22, transmission of the random access signal, and selection of the preamble sequence.

A DL synchronization channel receiver/processor 64 captures the DL synchronization channel of the handover destination base station 22. By capturing the DL synchronization channel, it is possible to determine the timing of the transmission slot for the random access signal.

Under the control of the handover operation controller 63, a receive frequency controller 65 controls the radio signal reception frequency of the radio unit 61 to a frequency for the handover.

The sequence decider 66 determines a preamble sequence for the random access signal. Where the preamble sequence information has been received from the decoder 62, the sequence decider 66 determines, as the preamble sequence, the one with the sequence number included in the preamble sequence information.

Also, if the handover does not meet with success during the preamble sequence usage period indicated by the preamble sequence information, the sequence decider 66 randomly selects a non-handover-specific sequence number. For example, a sequence number is selected at random from among the sequence numbers #5 to #k explained above with reference to FIG. 3.

Further, where no preamble sequence information is output from the decoder 62, the sequence decider 66 randomly selects a non-handover-specific sequence number. For example, the sequence decider randomly selects a sequence number from among the sequence numbers #5 to #k illustrated in FIG. 3.

In accordance with the sequence number determined by the sequence decider 66, a preamble signal sequence generator 67 generates a preamble sequence. For example, the preamble sequence is generated according to the formula (1) explained above with reference to FIG. 3.

A random access preamble signal generator 68 generates a preamble signal to be included in the random access signal. The preamble signal includes the preamble sequence generated by the preamble signal sequence generator 67.

A multiplexer 69 is input with the preamble signal generated by the random access preamble signal generator 68 and a control signal for the preamble signal. The multiplexer 69 multiplexes the preamble signal and the control signal and outputs the result to a switching unit 75.

A switching unit 70 is input with voice packets, user data, and surrounding cell measurement results. The switching unit 70 selectively outputs the voice packets, the user data, or the surrounding cell measurement results.

A channel coding unit 71 is input with the voice packets, the user data, or the surrounding cell measurement results from the switching unit 70. The channel coding unit 71 generates parity bits of the received data.

A channel coding unit 72 is input with a control signal for the voice packets, the user data, or the surrounding cell measurement results. The channel coding unit 72 generates parity bits of the control signal.

A switching unit 73 selects one of the data output from the channel coding unit 71 and the control signal output from the channel coding unit 72, and outputs the selected data or signal to a physical channel generator 74.

The physical channel generator 74 is input with the data or the control signal from the switching unit 73 and a pilot. The physical channel generator 74 combines the input data to generate data to be transmitted to the base station 21 or 22.

The switching unit 75 selects one of the data output from the multiplexer 69 and the data output from the physical channel generator 74, and outputs the selected data to a modulator 78. At the time of handover, the switching unit 75 selects the data output from the multiplexer 69 and outputs the selected data to the modulator 78. During the ordinary radio communication, the data output from the physical channel generator 74 is selected and output to the modulator 78.

A random access signal transmission determiner 76 determines the frame and slot for transmitting the random access signal. The random access signal transmission determiner 76 is notified by the handover operation controller 63 of the frame number for transmitting the random access signal (the frame number is transmitted from the handover destination base station 22), and determines, based on the notified frame number, the slot for transmitting the random access signal.

A transmit frequency controller 77 controls the transmit frequency when the random access signal is transmitted. During the transmission of data other than the random access signal, the transmit frequency is controlled to the frequency for radio transmission.

The modulator 78 modulates the data output from the switching unit 75. The data is modulated using a modulation scheme such as QPSK (Quadrature Phase Shift Keying), for example.

A radio unit 79 transmits the data output from the modulator 78, to the base station 21 or 22 via a transmitting antenna.

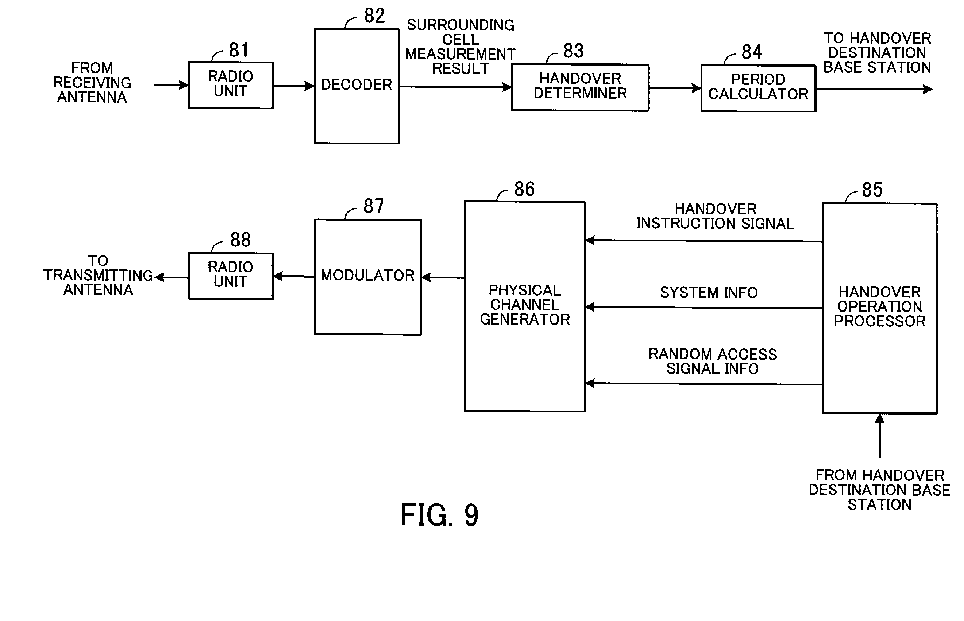

FIG. 9 is a hardware block diagram of the handover source base station. A radio unit 81 receives a radio signal from the terminal 11 via a receiving antenna.

A decoder 82 decodes the radio signal transmitted from the terminal 11 and outputs the surrounding cell measurement results.

In accordance with the surrounding cell measurement results output from the decoder 82, a handover determiner 83 determines whether or not a handover of the terminal 11 is needed.

A period calculator 84 calculates the usage period over which the terminal 11 is permitted to transmit the preamble sequence to the handover destination base station 22. For example, in accordance with the radio environment of the terminal 11 and the type of data being transmitted by radio to/from the terminal 11, the period calculator 84 calculates the preamble sequence usage period (e.g., the number of frames (number of slots) in which the random access signal is transmitted). Then, the period calculator 84 sends a notification of the preamble sequence usage period, together with a handover request, to the handover destination base station 22.

A handover operation processor 85 receives, from the handover destination base station 22, a handover instruction signal, system information of the base station 22, and random access signal information including the preamble sequence information and used at the time of the handover. The handover operation processor 85 outputs the received handover instruction signal, system information and random access signal information to a physical channel generator 86.

Based on the data output from the handover operation processor 85, the physical channel generator 86 generates transmit data to be transmitted to the terminal 11.

A modulator 87 modulates the transmit data output from the physical channel generator 86.

A radio unit 88 transmits by radio the transmit data output from the modulator 87, to the terminal 11 via a transmitting antenna.

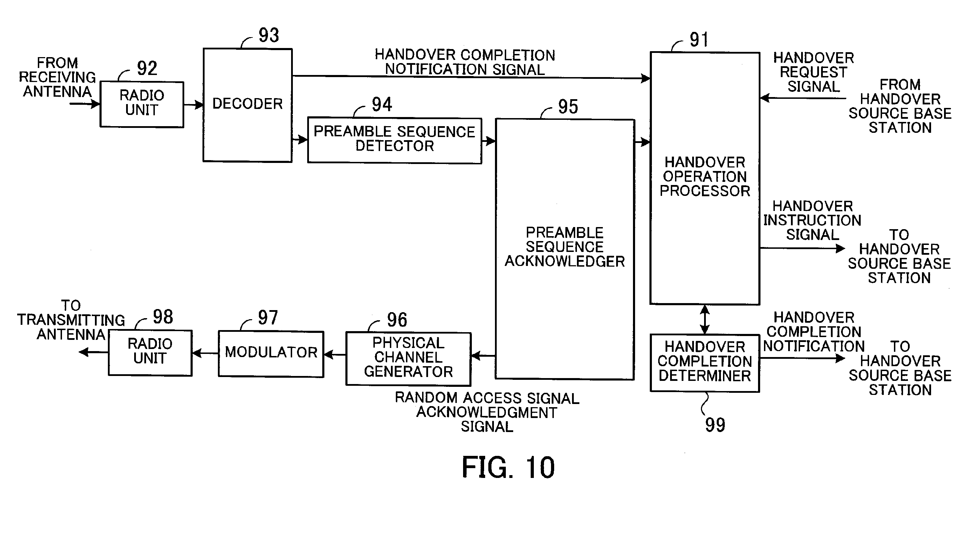

FIG. 10 is a hardware block diagram of the handover destination base station. A handover operation processor 91 receives the handover request from the handover source base station 21. At this time, the handover operation processor also receives the notification of the preamble sequence usage period calculated for the terminal 11.

On receiving the handover request from the handover source base station 21, the handover operation processor 91 determines whether to permit the handover or not. Also, the handover operation processor determines whether the requested preamble sequence usage period is permissible or not. If the preamble sequence usage period is permissible, the handover operation processor 91 selects a handover-specific sequence number as the sequence number to be allocated to the terminal 11. Then, the handover operation processor 91 transmits random access signal information including the selected sequence number (preamble sequence information), along with the handover instruction signal, to the handover source base station 21.

A radio unit 92 receives a radio signal from the terminal 11 via a receiving antenna.

A decoder 93 decodes the radio signal received by the radio unit 92. If the decoded radio signal is the random access signal, the decoder 93 outputs the decoded signal to a preamble sequence detector 94, and if the decoded radio signal is a completion notification signal indicative of the completion of the handover, the decoder outputs the decoded signal to the handover operation processor 91.

The preamble sequence detector 94 detects the preamble sequence from the random access signal.

A preamble sequence acknowledger 95 determines whether or not the preamble sequence detected by the preamble sequence detector 94 is identical with the preamble sequence allocated to the terminal 11.

If the detected preamble sequence is acknowledged as the preamble sequence allocated to the terminal 11, the preamble sequence acknowledger 95 outputs a random access signal acknowledgment signal to a physical channel generator 96.

Using the signal output from the preamble sequence acknowledger 95, the physical channel generator 96 generates transmit data to be transmitted to the terminal 11.

A modulator 97 modulates the transmit signal output from the physical channel generator 96.

A radio unit 98 transmits the transmit data output from the modulator 97, to the terminal 11 via a transmitting antenna.

When the random access signal acknowledgment signal is received, the terminal 11 transmits a handover completion notification signal to the base station 22. The handover operation processor 91 notifies a handover completion determiner 99 that the handover completion notification signal has been received.

When notified of the reception of the handover completion notification signal, the handover completion determiner 99 transmits a handover completion notification to the handover source base station 21.

Thus, in accordance with the radio environment of the terminal 11, the base station 21 varies the usage period over which the terminal 11 is permitted to transmit the handover-specific preamble sequence. This enables the base station 22 to effectively allocate a limited number of handover-specific preamble sequences to the terminal 11.

In the above example, the preamble sequence usage period is determined by the handover source base station 21 but may alternatively be determined by the handover destination base station 22. In this case, the handover source base station 21 needs to transmit the radio environment information, received from the terminal 11, to the handover destination base station 22. The handover destination base station 22 determines the preamble sequence usage period on the basis of the received radio environment information, like the usage period setter 43 of the handover source base station 21. Then, the handover destination base station 22 determines whether or not the determined usage period is permissible, in the same manner as explained above with reference to FIG. 7, and sends a handover instruction to the handover source base station 21. Also in this case, the base station 22 can effectively allocate a limited number of handover-specific preamble sequences to the terminal 11.

Also, when the handover request is received, the handover destination base station 22 may transmit, to the handover source base station 21, information indicating a currently available preamble sequence and its usage period. The usage period is determined in accordance with the allocation status of the handover-specific preamble sequences, in the same manner as performed by the preamble sequence selector 53 illustrated in FIG. 7. Then, the handover source base station 21 determines based on the radio environment information received from the terminal 11 whether or not the usage period notified by the handover destination base station 22 is sufficiently long. If the usage period is sufficiently long, the handover source base station notifies the terminal 11 of the usage period. On the other hand, if the usage period is not long enough, the handover source base station 21 calculates the necessary usage period, in the same manner as explained above, and requests the handover destination base station 22 to determine whether or not the calculated usage period is permissible. Also in this case, the base station 22 can effectively allocate a limited number of handover-specific preamble sequences to the terminal 11.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

Description of Reference Numerals

    1: radio base station
    1a: radio environment acquirer
    1b: transmitter
    2: mobile station

## Claims

1. A radio base station for performing radio communication with a mobile station, comprising:

    a radio environment acquirer configured to acquire a radio environment condition of the radio communication with the mobile station subordinate to the radio base station; and
    a transmitter configured to transmit, to the mobile station, information notifying a signal which is selected from among multiple signal groups and which is to be transmitted in a transmission area of a random access signal, and a notification of a period over which transmission of the signal as the random access signal is permitted, wherein the period is variable in accordance with the radio environment condition acquired by the radio environment acquirer.

2. The radio base station according to claim 1, wherein the period is set to a longer period as the radio environment condition becomes worse.

3. The radio base station according to claim 1, wherein the period is varied in accordance with a type of data communicated with the mobile station by radio.

4. The radio base station according to claim 3, wherein, when the type of data is voice data, the period is set longer than when the type of data is other data than the voice data.

5. The radio base station according to claim 1, wherein the period is varied in accordance with the radio environment condition of the radio communication between the mobile station and the radio base station which is a source of handover.

6. The radio base station according to claim 1, wherein the information is transmitted from the radio base station which is a destination of handover.

7. The radio base station according to claim 1, further comprising a period transmitter configured to transmit the notification of the period to the radio base station which is a destination of handover, wherein, after being notified by the radio base station as the destination of handover that the period is permissible, the transmitter transmits the information and the notification of the period to the mobile station.

8. The radio base station according to claim 7, wherein the period is varied also by the radio base station as the destination of handover.

9. The radio base station according to claim 1, wherein the transmitter transmits the information and the notification of the period to the mobile station via the radio base station which is a source of handover.

**10.** The radio base station according to claim 1, wherein the transmitter also transmits a notification of a transmission start time for the random access signal.

**11.** A mobile station for performing radio communication with a radio base station, comprising:

> a receiver configured to receive, from the radio base station, information notifying a signal which is selected from among multiple signal groups and which is to be transmitted in a transmission area of a random access signal, and a notification of a period over which transmission of the signal as the random access signal is permitted; and
> a transmitter configured to transmit the signal designated by the information, as the random access signal to the radio base station during the period.

RADIO BASE
STATION
⌒1

┌─────────────────────────────────────────────┐
│                                              │
│   ⌒1a                      ⌒1b               │
│  ┌──────────────┐        ┌──────────────┐   │
│  │    RADIO      │   ──▶  │ TRANSMITTER  │   │
│  │ ENVIRONMENT  │        │              │   │
│  │  ACQUIRER    │        │              │   │
│  └──────────────┘        └──────────────┘   │
│                                              │
└─────────────────────────────────────────────┘

2

# FIG. 1

FIG. 2

| | |
|---|---|
| SEQUENCE #1 | |
| SEQUENCE #2 | USED EXCLUSIVELY FOR HANDOVER |
| SEQUENCE #3 | |
| SEQUENCE #4 | |
| SEQUENCE #5 | |
| SEQUENCE #6 | |

SEQUENCE #k-1

SEQUENCE #k

# FIG. 3

A11

HANDOVER-SPECIFIC PREAMBLE SEQUENCE USAGE PERIOD

HANDOVER START INSTRUCTION

FRAME #k   FRAME #k+1   FRAME #k+2   FRAME #k+3   FRAME #k+4   FRAME #k+5

FIG. 4

TO
HANDOVER
SOURCE BASE
STATION

FROM
HANDOVER
SOURCE BASE
STATION

11 TERMINAL

31
RADIO
ENVIRONMENT
NOTIFIER

32
HANDOVER
INSTRUCTION
RECEIVER

33
HANDOVER
CONTROLLER

TO
HANDOVER
DESTINATION
BASE STATION

FIG. 5

FROM
TERMINAL    21  BASE
) STATION

TO
TERMINAL

41
RADIO
ENVIRONMENT
RECEIVER

46
HANDOVER
INSTRUCTION
TRANSMITTER

42
HANDOVER
DETERMINER

43
USAGE
PERIOD
SETTER

44
HANDOVER
REQUEST
TRANSMITTER

45
HANDOVER
INSTRUCTION
RECEIVER

TO
HANDOVER
DESTINATION
BASE STATION

FROM
HANDOVER
DESTINATION
BASE STATION

FIG. 6

FROM HANDOVER
SOURCE BASE
STATION

**22** BASE
STATION

HANDOVER
REQUEST
RECEIVER
51

HANDOVER
DETERMINER
52

PREAMBLE SEQUENCE
SELECTOR
53

HANDOVER
INSTRUCTION
TRANSMITTER
54

TO HANDOVER
SOURCE BASE
STATION

# FIG. 7

FIG. 8

FIG. 9

EP 2 187 683 A1

FROM
RECEIVING
ANTENNA

RADIO
UNIT
_92

DECODER
_93

HANDOVER COMPLETION
NOTIFICATION SIGNAL

HANDOVER
OPERATION
PROCESSOR
_91

HANDOVER
REQUEST
SIGNAL
FROM
HANDOVER
SOURCE BASE
STATION

PREAMBLE SEQUENCE
DETECTOR
_94

PREAMBLE
SEQUENCE
ACKNOWLEDGER
_95

HANDOVER
INSTRUCTION
SIGNAL
TO
HANDOVER
SOURCE BASE
STATION

TO
TRANSMITTING
ANTENNA

RADIO
UNIT
_98

MODULATOR
_97

PHYSICAL
CHANNEL
GENERATOR
_96

RANDOM ACCESS SIGNAL
ACKNOWLEDGMENT
SIGNAL

HANDOVER
COMPLETION
DETERMINER

HANDOVER
COMPLETION
NOTIFICATION
TO
HANDOVER
SOURCE BASE
STATION

99

FIG. 10

## INTERNATIONAL SEARCH REPORT

| | International application No. |
|---|---|
| | PCT/JP2007/065753 |

**A. CLASSIFICATION OF SUBJECT MATTER**
*H04Q7/36*(2006.01)i, *H04Q7/22*(2006.01)i, *H04Q7/28*(2006.01)i

According to International Patent Classification (IPC) or to both national classification and IPC

**B. FIELDS SEARCHED**

Minimum documentation searched (classification system followed by classification symbols)
H04Q7/36, H04Q7/22, H04Q7/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2007/083550 A1 (NTT Docomo Inc.), 26 July, 2007 (26.07.07), Full text (Family: none) | 1-11 |
| A | WO 2005/088989 A2 (QUALCOMM INC.), 22 September, 2005 (22.09.05), Abstract; Claims & US 2005/0201335 A1 & EP 1723822 A & CA 2559238 A & JP 2007-528683 A | 1-11 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 November, 2007 (19.11.07) | 27 November, 2007 (27.11.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (EUTRAN); Overall description; Stage 2 (Release 8). *3rd Generation Partnership Project,* June 2007